Europäisches Patentamt

European Patent Office

Office européen des brevets

(11) Veröffentlichungsnummer: **0 244 563**
**A2**

(12) # EUROPÄISCHE PATENTANMELDUNG

(21) Anmeldenummer: **87101467.6**

(22) Anmeldetag: **04.02.87**

(51) Int. Cl.⁴: **B60P 7/04** , B60J 7/10

(30) Priorität: **29.04.86 HU 176886**

(43) Veröffentlichungstag der Anmeldung:
**11.11.87 Patentblatt 87/46**

(84) Benannte Vertragsstaaten:
**AT BE CH DE ES FR GB IT LI LU NL SE**

(71) Anmelder: **Kovács, József**
**Markò u. 1a**
**H-1055 Budapest(HU)**

Anmelder: **Fekete, György**
**Visegrádi u. 67**
**H-1132 Budapest(HU)**

Anmelder: **Balázs, Jòzsef**
**Lakatos u. 24**
**H-1184 Budapest(HU)**

(72) Erfinder: **Kovács, Jòzsef**
**Markò u. 1a**
**H-1055 Budapest(HU)**
Erfinder: **Fekete, György**
**Visegrádi u. 67**
**H-1132 Budapest(HU)**
Erfinder: **Balázs, Jòzsef**
**Lakatos u. 24**
**H-1184 Budapest(HU)**

(74) Vertreter: **Patentanwälte Viering & Jentschura**
**Steinsdorfstrasse 6**
**D-8000 München 22(DE)**

(54) **Vorrichtung zum Abdecken von Materialien während des Transports und der Lagerung.**

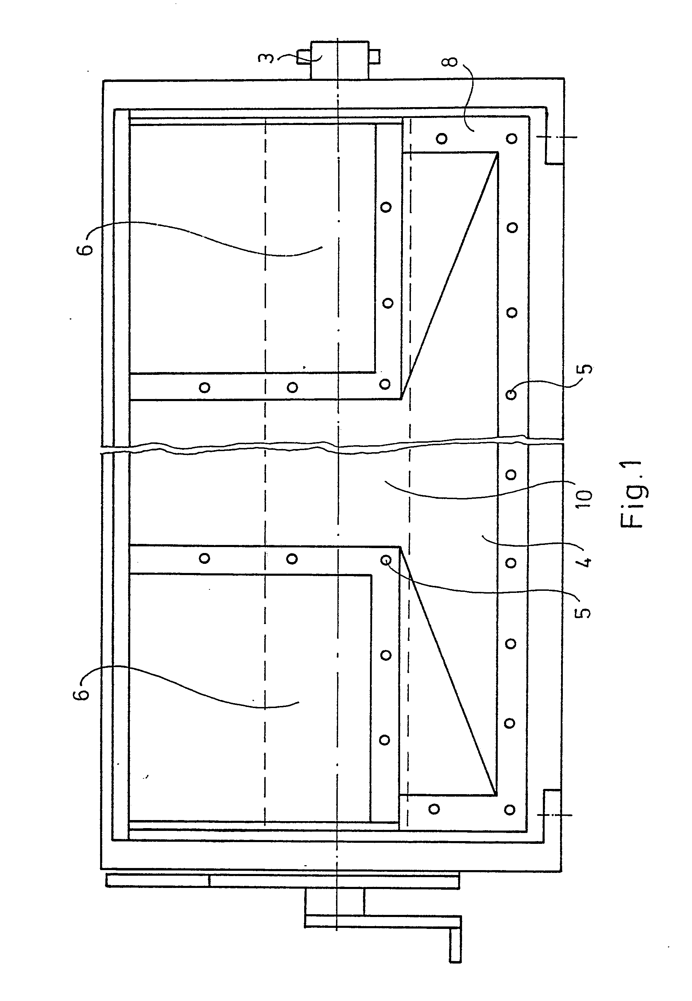

(57) Vorrichtung zum Abdecken von Materialien während des Transports und der Lagerung, wobei das abzudeckende Material in einem von einem Bodenteil und Seitenwänden begrenzten Lagerraum angeordnet ist. Die erfindungsgemäße Vorrichtung kann dadurch gekennzeichnet werden, daß sie einen an einem Ende des Lagerraums befestigten, mit einem gegen Abrollen sichernden Klinkenradmechanismus versehenen Spuler (3) aufweist und eine auf die Welle bzw. die Trommel (6) des Spulers (3) aufwickelbare flexible Umhüllung (4) vorgesehen ist. An den Rändern des als Umhüllung (4) dienenden Stoffes sind Befestigungsorgane, wie Ösen (5), Schlaufen, Haken oder dergleichen angeordnet (Fig. 1).

Fig. 1

## Vorrichtung zum Abdecken von Materialien während des Transports und der Lagerung

Die Erfindung betrifft eine Vorrichtung zum Abdecken verschiedener Materialien während des Transports und der Lagerung, wobei das abzudeckende Material vorteilhaft in einem mit Bodenteil und Seitenwänden begrenzten Raum gelagert ist.

Wie es wohlbekannt ist, besteht häufig das Erfordernis, verschiedene Materialien und so auch Schüttgut zu lagern oder zu transportieren. Diese Materialien müssen sowohl während der Lagerung, sowie für die Dauer des Transports gegenüber den Einwirkungen des Wetters, wie Regen, Wind usw., geschützt werden. Gleichzeitig besteht die Forderung, das Aufwirbeln bzw. das Abfalleln der erwähnten Materialien aus dem Lager-oder Transportraum unbedingt zu verhindern, weil darüberhinaus, daß ein Verlust entsteht, auch die Umgebung verunreinigt wird.

So z.B. geht eine unmeßbare Menge von Naturalien im Laufe der Erntearbeiten in der Landwirtschaft verloren, und zwar dadurch, daß während des Transports auf einem offenen Fahrzeug oder Lastkraftwagen ein bedeutender Teil der Produkte zerstreut wird.

Das oben erwähnte Problem tritt auch bei der Lagerung und im Laufe des Transports zahlreicher sonstiger Materialien auf, so z.B. wenn Sand, Schotter, Kies usw. transportiert wird. Neben den obenerwähnten Nachteilen kann z.B. der von dem LKW abfallende Kies auch für die übrigen am Verkehr teilnehmenden Kraftfahrzeuge unfallgefährlich sein.

Zur Vermeidung der obenerwähnten Nachteile hatte sich die Methode im weiten Kreise verbreitet, die zu transportierenden oder zu lagernden Materialien mit einer Plane oder einem ähnlichen flexiblen Stoff abzudecken und die Abdeckung bzw. den abdeckenden Stoff provisorisch, z.B. mit einem Seil zu befestigen.

Der Nachteil dieser Methode besteht jedoch darin, daß der Arbeitsgang des Abdeckens wie auch das Abnehmen der Abdeckung eine langwierige und bedeutenden Aufwand an physikalischer Kraft beanspruchende Tätigkeit darstellt.

Nehmen wir den Fall eines mit einer Plane abgedeckten Lastkraftwagens als Beispiel, denn die zusammengefaltete Plane muß auf dem zu lagernden Material auseinandergefaltet werden und die Ränder - die man von den Seitenwänden des Lagerraums herabhängen läßt - müssen befestigt werden. Wenn nun die Abdeckung überflüssig wird, muß die Befestigung an dem Randbereich gelöst werden, wonach die Plane zusammengefaltet und an einer entsprechenden Stelle gelagert wird.

Wegen der erwähnten langwierigen und - schweren Arbeit wird das Abdecken vernachlässigt, was dann wieder zu den bereits erwähnten Problemen führt.

Der Erfindung wurde das Ziel gesetzt, eine zum Abdecken verschiedener Materialien während des Transports und für die Dauer der Lagerung dienende Vorrichtung ohne die erwähnten Mängel und so auszubilden, daß die Materialien einfach abgedeckt bzw. freigelegt werden können und die Arbeit einfach, mit einem minimalen Kraftaufwand vorgenommen werden kann.

Die Erfindung beruht auf der Erkenntnis, daß das gesetzte Ziel erreicht werden kann, wenn die flexible Umhüllung auf eine gegen ein zufälliges Abrollen gesicherte Konstruktion aufgewickelt wird und diese Konstruktion an dem einen Ende des Lagerraums bzw. des Transportraums befestigt wird.

Die Vorrichtung bzw. Konstruktion kann an dem einen Ende eines jedweden Lager-bzw. Transportraumes befestigt werden. Nach erfolgtem Einlagern des Materials wird der als Umhüllung dienende Stoff einfach abgewickelt, über das gelagerte Material gezogen und an den Rändern befestigt.

Demnach bezieht sich die Erfindung auf eine Vorrichtung zum Abdecken verschiedener Materialien während der Lagerung bzw. des Transports, wobei das abzudeckende Material in einem vorteilhaft mit einem Bodenteil und Seitenwänden begrenzten Lagerraum gelagert ist.

Das Wesen der Erfindung liegt insbesondere darin, daß die Vorrichtung einen an dem einen Ende des Lagerraums befestigten, gegen unbeabsichtigtes Abwickeln gesicherten, mit einem lösbaren Klinkenradmechanismus versehenen Spuler und eine auf die Welle des Spulers bzw. auf dessen Trommel aufwickelbare, aus textilem Stoff oder einem Ersatzstoff davon ausgebildete Umhüllung aufweist und daß an den freien Rändern der Umhüllung Befestigungsorgane, wie Ösen, Schlaufen, Haken oder dergleichen vorhanden sind.

Um gewährleisten zu können, daß die Umhüllung das transportierte oder gelagerte Material auch von der Seite her entsprechend schützt bzw. abdeckt, gleichzeitig aber dieser die seitliche Abdeckung bildende Teil leicht aufgewickelt werden kann, d.h. sich an das Grundmaterial gut anschmiegt, wird die erfindungsgemäße Vorrichtung vorzugsweise so realisiert, daß an beiden Längsseiten der Umhüllung zurückgefaltete, beim Abdecken die Seitenabdeckung bildende Streifen vorgesehen sind, die in der Nähe der Biegekante bzw. Faltlinie an dem Grundmaterial angeschweißt, angenäht, angeklebt oder auf sonstige Weise befestigt sind.

In dieser Weise können die Ränder der abgewickelten Umhüllung leicht auf das abzudeckende Material ausgeschlagen werden, während beim Aufdecken die Ränder einfach nach oben auf den Grundstoff rückgefaltet werden; die Streifen liegen dann glatt auf dem Grundmaterial an, wonach die gesamte Umhüllung leicht aufgewickelt werden kann. Besteht nun die Absicht, die erfindungsgemässe Vorrichtung zum Abdecken der Ladefläche eines Lastkraftwagens zu verwenden, wird der Spuler an dem bei dem Fahrerhaus liegenden Ende der Ladefläche befestigt; er kann z.B. an dem Fahrerhaus selbst befestigt werden.

Unter Anwendung der erfindungsgemäßen Vorrichtung kann das gesetzte Ziel vollkommen erreicht werden, die gelagerten oder transportierten Materialien werden schnell und mit einem verhältnismässig geringen Kraftaufwand abgedeckt bzw. kann die Umhüllung ohne etwaige Schwierigkeit wieder aufgewickelt werden. Auch das Umsetzen der erfindungsgemässen Vorrichtung geht leicht und schnell und so besteht eigentlich nicht das Erfordernis, alle Lagerräume oder Transportmittel mit einer eigenen Vorrichtung zu versehen.

Die Erfindung wird anhand eines vorteilhaften Ausführungsbeispiels mit Hilfe der Zeichnung näher erläutert; es zeigen

Figur 1 die Vorderansicht der erfindungsgemäßen Vorrichtung im nichtmontierten Zustand,

Figur 2 die Seitenansicht der erfindungsgemäßen Vorrichtung, die auf einen LKW montiert ist und dessen Transportraum abdeckt,

Figur 3 die Seitenansicht einer Ausführungsform des Klinkenradmechanismus des Spulers der erfindungsgemäßen Vorrichtung.

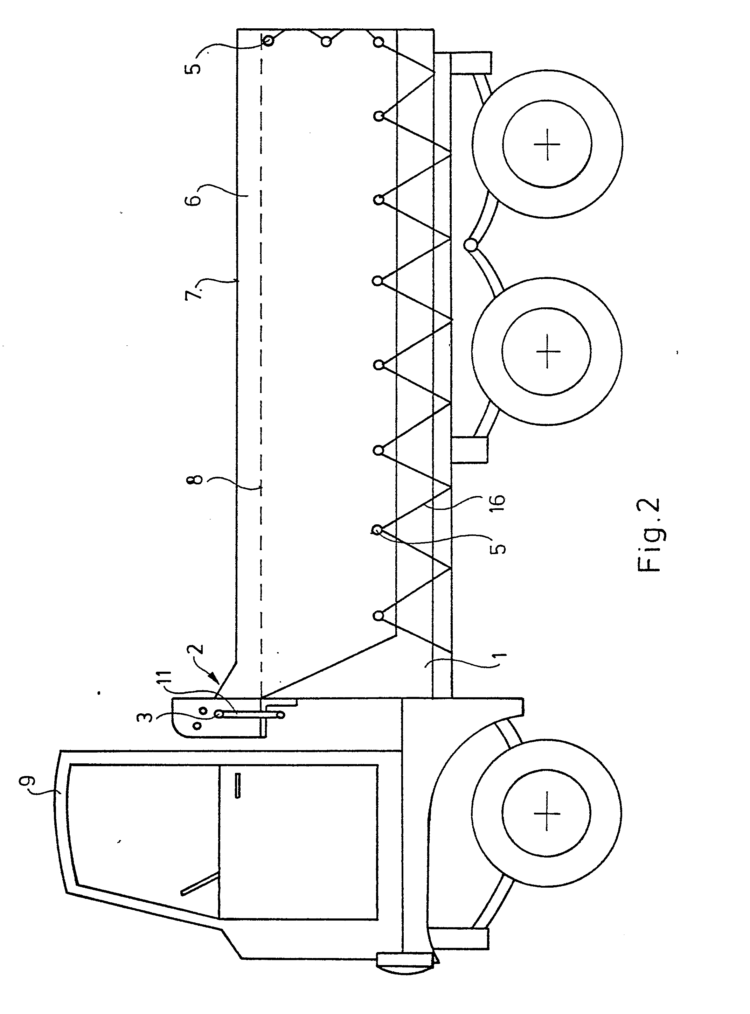

Wie aus Fig. 1 und 2 eindeutig ersichtlich, wird bei der erfindungsgemäßen Vorrichtung die Umhüllung 4 von einer Plane gebildet, die auf die Trommel 10 des Spulers 3 aufgewickelt werden kann. Der Spuler 3 selbst ist ein an sich bekannter Hebelmechanismus, so daß eine ausführliche Beschreibung entbehrlich ist.

An beiden Längsseiten der die Umhüllung bildenden Plane 4 ist je ein nach oben rückgefalteter Streifen 6 vorgesehen, dem die Aufgabe zugeteilt wird, den Lagerraum 1 bzw. den Laderaum von der Seite her abzudecken.

In dem Aufgewickelten Zustand sind die Streifen 6 nach oben gefaltet und liegend auf dem Grundstoff auf. Um gewährleisten zu können, daß die Streifen 6 glatt und leicht auf dem Grundstoff aufliegen können, sind beide Streifen im Bereich der Biegekante bzw. Faltlinie 7 an dem Grundstoff befestigt.

Die Befestigung kann durch Schweißen, Annähen, Ankleben oder auf sonstige Weise erfolgen.

An den Rändern der Umhüllung bzw. der Plane 4 sind Befestigungsorgane - in unserem Beispiel Ösen 5 - angeordnet; mit dem durch die Ösen geführten Seil 16 wird die Umhüllung befestigt.

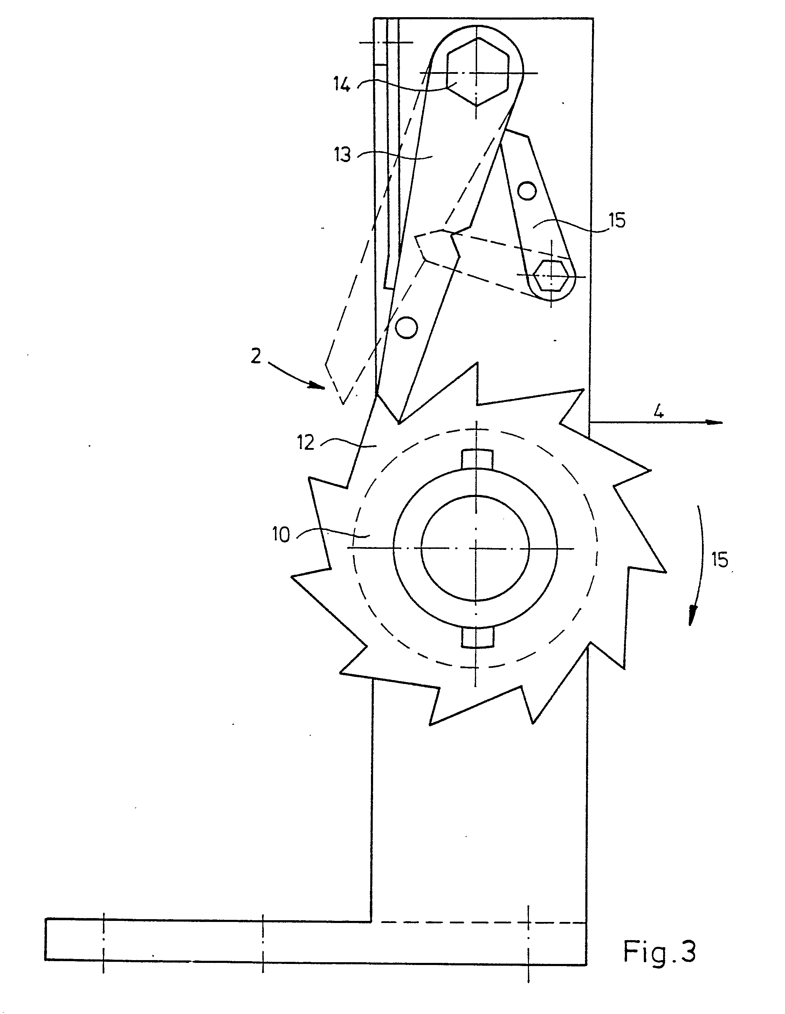

Bei der Ausführungsform aus Figur 2 ist die erfindungsgemässe Vorrichtung hinter dem Fahrerhaus 9 eines LKW angeordnet. Der Kurbelarm 11 selbst ist an dem viereckigen abgeflachten Ende der Welle der Trommel 10 angeordnet; an demselben Wellenende ist das Klinkenrad 12 befestigt (Fig. 3), in welches die um die Achse 14 verkippbare Klinke 13 einrastet. Die Klinke 13 kann mit Hilfe des Arms 15 in den Zähnen des Klinkenrads gehalten bzw. aus den Zähnen ausgehoben werden.

Wenn nun die Absicht besteht, den Transportraum des LKW nach Figur 2 mit der erfindungsgemässen Vorrichtung abzudecken, verfährt man so, daß man die Trommel 10 mit dem Kurbelarm in Richtung des Pfeils gewissermaßen verschiebt, wonach mit Hilfe des Arms 15 die Klinke 13 aus ihrer mit dem Klinkenrad 12 in Berührung stehenden Position ausgehoben wird. Darauffolgend wird die Plane 4 in dem erforderlichen Maße abgewickelt, während die Trommel 10 sich frei drehen läßt. Danach wird der Arm 15 angehoben, so daß die Klinke 13 in den entsprechenden Zahn des Klinkenrads 12 einfällt. In dem nächsten Arbeitsschritt werden die seitlichen Steifen 6 der Plane ausgebreitet, so daß diese an der Seitenwand des Lagerraums 1 des LKW anliegen, wonach mit dem in die Ösen 5 eingefädelten Seil 16 die Umhüllung bzw. die Plane befestigt wird.

Das Entfernen der Umhüllung findet in umgekehrter Reihenfolge statt: man löst das Seil 16, faltet die seitlichen Streifen 6 der Plane nach oben um und wickelt die Plane mit Hilfe des Kurbelarms 11 auf die Trommel 10.

Wie es aus dem geschilderten Ausführungsbeispiel hervorgeht, kann das Abdecken bzw. Aufdecken der Waren unter Anwendung der erfindungsgemäßen Vorrichtung äußerst einfach und schnell erreicht werden.

Die erfindungsgemäße Vorrichtung kann beinahe auf allen Gebieten der Lagerung bzw. des Transports Verwendung finden.

## Ansprüche

1. Vorrichtung zum Abdecken von Materialien während der Lagerung oder für die Dauer des Transports, wobei das abzudeckende Material in einem durch einen Bodenteil und Seitenwände begrenzten Lagerraum (1) angeordnet ist, dadurch gekennzeichnet, daß die Vorrichtung einen an dem einen Ende des Lagerraums (1) befestigten, mit einem gegen das Abrollen sichernden Klinkenradmechanismus (12, 13) versehenen Spuler (3) und eine auf die Welle bzw. Trommel (10) des Spulers (3) aufwickelbare flexible Umhüllung (4) aufweist und an den Rändern des als Umhüllung (4) dienenden Stoffes Befestigungsorgane (5) wie Ösen, Schlaufen, Haken und dergleichen angeordnet sind.

2. Vorrichtung nach Anspruch 1, dadurch gekennzeichnet, daß an beiden Längsseiten der Umhüllung (4) nach oben zurückgefaltete, beim Abdecken die seiliche Abdeckung bildende Streifen (6) im Bereich der Faltlinie (7) an dem Grundstoff angeschweißt, angenäht, angeklebt oder auf andere Weise befestigt sind.

3. Vorrichtung nach Anspruch 1 oder 2 zum Abdecken der Ladefläche eines Lastkraftwagens, dadurch gekennzeichnet, daß der Spuler (3) an dem am Fahrerhaus (9) liegenden Ende der Ladefläche befestigt ist.

Fig.1

0 244 563

Fig.2

14

13

15

2

4

12

10

15

Fig.3